# DEMANDE DE BREVET EUROPEEN

(11) **EP 0 894 676 A1**
(43) Date de publication de la demande: **03.02.1999**
(21) Numéro de dépôt: 98401783.0
(22) Date de dépôt: 15.07.1998
(51) Int. Cl.: B60R 19/40

(54) **Agencement perfectionné d'une poutre de pare-chocs dans un véhicule automobile**

(30) Priorité: 28.07.1997 FR 9709592
(71) Demandeur: ECIA - EQUIPEMENTS ET COMPOSANTS POUR L'INDUSTRIE AUTOMOBILE, F-25400 Audincourt (FR)
(72) Inventeur: Lazzeroni, Eric, 25250 Mediere (FR); Bierjon, Didier, 90000 Belfort (FR)
(74) Mandataire: de la Bigne, Guillaume Michel Marie

(57) **Abrégé**

Cette poutre (14) est reliée à un support fixe (16) du véhicule par au moins un ensemble (18) de déplacement longitudinal de cette poutre comportant une roue motrice (20) portée par le support fixe (16) et un organe entraîné (22) relié à la poutre (14). La roue motrice (20) est couplée à l'organe entraîné (22) par des moyens (24) de transformation de mouvement de rotation en mouvement de translation de manière à déplacer longitudinalement l'organe entraîné (22) entre des première et seconde positions respectivement de repos et de déploiement de la poutre (14). La roue motrice (20) est entraînée par un fluide sous pression, notamment un liquide sous pression d'un circuit hydraulique primaire (48) du véhicule, par exemple un circuit hydraulique de direction assistée du véhicule. De préférence, les moyens de transformation de mouvement de rotation en mouvement de translation sont constitués par des moyens de vissage.

## Description

La présente invention concerne un agencement perfectionné d'une poutre de pare-chocs dans un véhicule automobile.

On connaît déjà dans l'état de la technique un véhicule automobile à pare-chocs avant déployable dans lequel, en cas de risque de choc, le pare-chocs se déplace longitudinalement depuis une position de repos jusqu'à une position déployée. Dans cette dernière position, la longueur du véhicule est augmentée, ce qui permet d'absorber une plus grande quantité d'énergie de choc.

EP-A-0 535 175 décrit un agencement d'une poutre de pare-chocs dans un véhicule automobile, du type dans lequel la poutre est reliée à un support fixe du véhicule par au moins un ensemble de déplacement longitudinal de cette poutre comportant un organe d'entraînement, porté par le support fixe, et un organe entraîné, relié à la poutre, l'organe d'entraînement étant couplé à l'organe entraîné par des moyens de vissage de manière à déplacer longitudinalement l'organe entraîné entre des première et seconde positions respectivement de repos et de déploiement de la poutre.

Dans l'exemple illustré sur la figure 8 de ce document, l'organe d'entraînement est constitué par un moteur électrique. Or, ce moteur ne permet pas d'obtenir une vitesse de déploiement du pare-chocs suffisante.

L'invention a pour but de proposer un pare-chocs déployable à l'aide de moyens de vissage pouvant être actionnés de façon très rapide.

A cet effet, l'invention a pour objet un agencement d'une poutre de pare-chocs dans un véhicule automobile, du type précité, **caractérisé en ce que** l'organe d'entraînement est une roue motrice entraînée par un fluide sous pression.

Suivant des caractéristiques de différents modes de réalisation de l'invention:
- la roue motrice est entraînée en rotation dans un sens, dit sens d'avance, par un jet de fluide, dit jet d'avance, de manière à déplacer l'organe entraîné vers sa seconde position ;
- la roue motrice est entraînée en rotation dans un sens, dit sens de recul, opposé au sens d'avance, par un moteur électrique, de manière à déplacer l'organe entraîné vers sa première position ;
- la roue motrice est entraînée en rotation dans un sens, dit sens de recul, opposé au sens d'avance, par un jet de fluide, dit jet de recul, de direction sensiblement opposée au jet d'avance, de manière à déplacer l'organe entraîné vers sa première position ;
- la roue motrice est une roue hydraulique entraînée par le liquide sous pression d'un circuit hydraulique primaire du véhicule, notamment un circuit hydraulique de direction assistée du véhicule ;
- la roue motrice est entraînée par le liquide sous pression d'au moins un circuit hydraulique secondaire raccordé au circuit hydraulique primaire par l'intermédiaire d'un compresseur-détendeur ;
- le circuit hydraulique secondaire comporte un accumulateur de pression raccordé à une buse de formation d'un jet de liquide sous pression dirigé sur la roue motrice par l'intermédiaire d'un distributeur commandé par une unité centrale de gestion des déplacements de la poutre ;
- l'agencement comprend deux ensembles de déplacement, les deux roues motrices étant entraînées par le liquide sous pression d'au moins deux circuits hydrauliques secondaires respectifs identiques raccordés aux circuit hydrauliques primaires par un compresseur-détendeur commun;
- les moyens de transformation de mouvement de rotation en mouvement de translation sont constitués par des moyens de vissage;
- les moyens de vissage comprennent une vis sans fin montée rotative sur le support fixe et couplée à la roue motrice, coopérant par vissage avec une douille à billes solidaire de l'organe entraîné, les billes de la douille engrenant avec un filetage autobloquant de la vis sans fin ;
- l'ensemble de déplacement, ou chaque ensemble de déplacement, comprend un arbre commun à la roue motrice et à la vis sans fin monté rotatif à l'intérieur d'un longeron du véhicule.

L'invention sera mieux comprise à la lecture de la description qui va suivre donnée uniquement à titre d'exemple et faite en se référant aux dessins dans lesquels:
- la figure 1 est une vue schématique d'une poutre de pare-chocs agencée, selon un premier mode de réalisation de l'invention, dans un véhicule automobile ;
- la figure 2 est une vue en coupe longitudinale d'un ensemble de déplacement de la poutre illustrée sur la figure 1 ;
- la figure 3 est une vue similaire à la figure 1 d'une poutre de pare-chocs agencée, selon un second mode de réalisation de l'invention, dans un véhicule automobile.

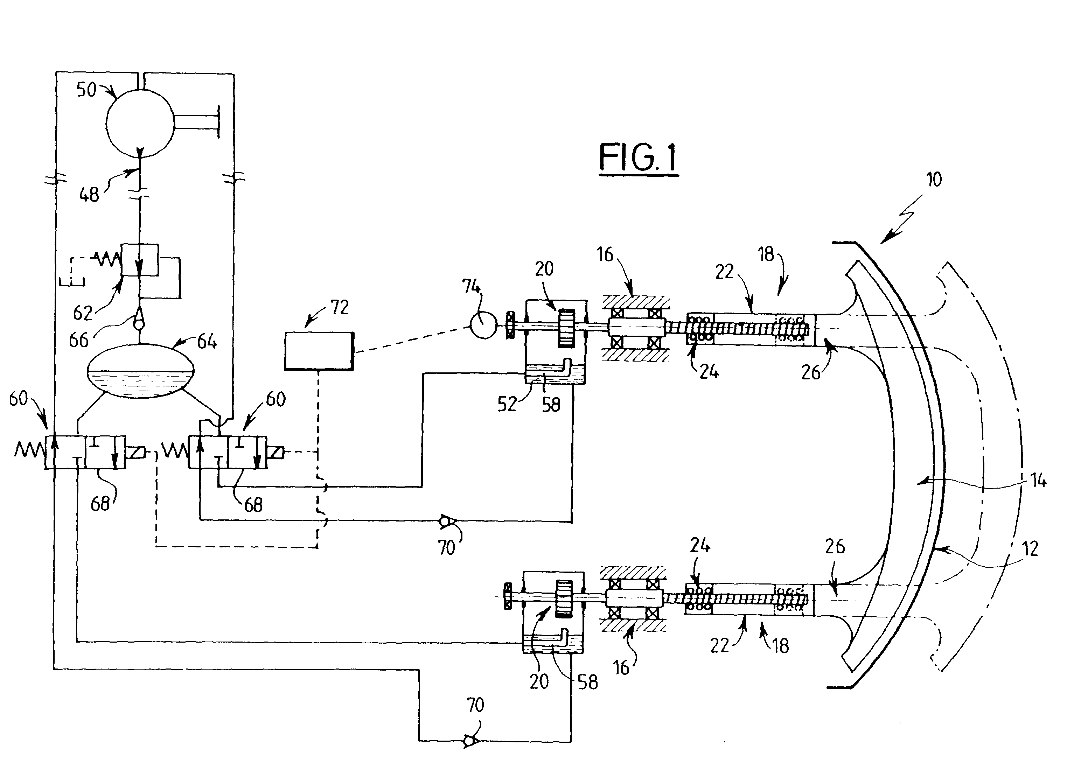

On a représenté sur la figure 1 un pare-chocs 10 agencé, selon un premier mode de réalisation de l'invention, à l'avant d'un véhicule automobile. De façon classique, le pare-chocs 10 comporte une peau 12 ou coque portée par une poutre 14.

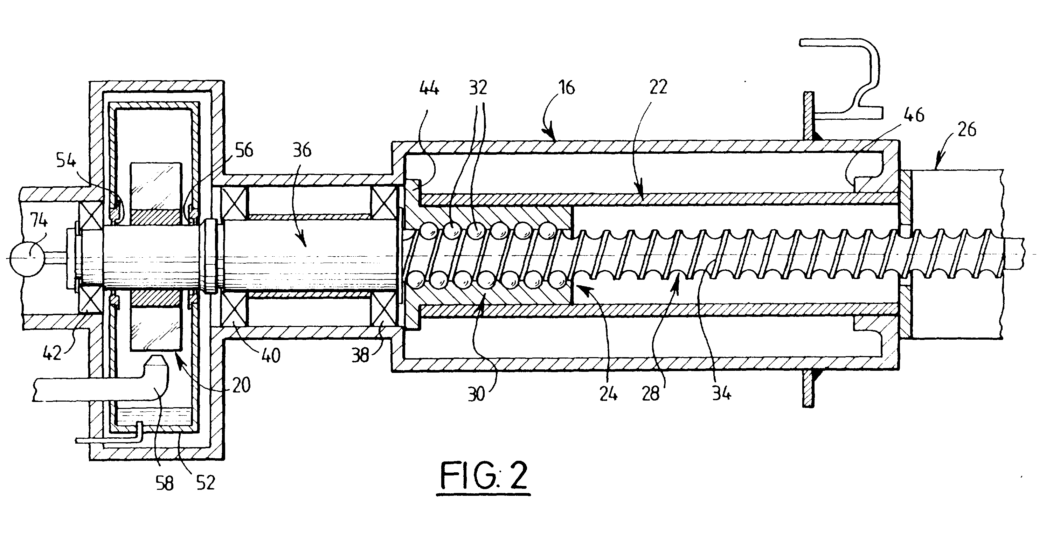

Cette poutre 14 est reliée à deux longerons fixes 16 du véhicule, dont l'un est représenté partiellement notamment sur la figure 2, par deux ensembles 18 de déplacement longitudinal de cette poutre.

Chaque ensemble de déplacement 18 comprend une roue motrice 20, formant organe d'entraînement, entraînée par un fluide sous pression, et un manchon 22, formant organe entraîné, couplé à la roue motrice 20 par des moyens 24 de vissage. La roue motrice 20 est portée par le longeron 16 correspondant. Le manchon 22 est relié à la poutre 14 par l'intermédiaire d'un organe classique 26 d'absorption d'énergie.

Les moyens de vissage 24 permettent de déplacer longitudinalement le manchon 22 entre des première et seconde positions respectivement de repos et de déploiement de la poutre 14. Sur la figure 1, on a représenté, en traits continus, la première position de repos de la poutre 14, et en traits mixtes, la seconde position de déploiement de cette poutre 14.

De préférence, comme cela est représenté notamment sur la figure 2, les moyens de vissage 24 comprennent une vis sans fin 28, montée rotative dans le longeron 16, coopérant par vissage avec une douille mobile 30 à billes 32, de type classique, solidaire du manchon entraîné 22. Les billes 32 engrènent avec un filetage autobloquant 34 de la vis sans fin.

Chaque ensemble de déplacement 18 comporte un arbre 36 commun à la roue motrice 20 et à la vis sans fin 28 monté rotatif à l'intérieur du longeron 16 correspondant à l'aide de trois roulements 38 à 42 espacés longitudinalement. Ainsi, d'une part, la vis sans fin 28 est couplée à la roue motrice 20, et d'autre part, cette vis sans fin 28 est centrée et immobilisée axialement par les roulements 38 à 42.

On notera que la douille 30 comporte une collerette 44 destinée à coopérer avec une butée fixe 46 de fin de course du manchon 22, ménagée à l'intérieur du longeron 16.

De préférence, la roue motrice 20 est une roue hydraulique entraînée par le liquide sous pression d'un circuit hydraulique primaire 48 du véhicule. Ce circuit primaire 48 est notamment un circuit hydraulique de direction assistée du véhicule dont on a représenté une pompe 50 sur la figure 1.

La roue motrice 20 est par exemple du type à ailettes. Cette roue 20 est logée dans un carter 52 placé à l'intérieur du longeron 16. Ce carter 52 comporte des passages étanches 54,56 traversés par l'arbre 36.

La roue motrice 20 est entraînée en rotation dans un sens, dit sens d'avance, par un jet de fluide, dit jet d'avance, de manière à déplacer le manchon 22 vers sa seconde position (collerette 44 de la douille en appui contre la butée 46 du longeron). Le jet d'avance est formé par une buse d'avance 58 débouchant dans le carter 52 et dirigée vers les ailettes de la roue motrice 20.

La buse d'avance 58 associée à chaque ensemble de déplacement 18 est alimentée en liquide sous pression par un circuit hydraulique secondaire d'avance 60. Les deux circuits secondaires d'avance 60 sont raccordés au circuit hydraulique primaire 48 par l'intermédiaire d'un compresseur-détendeur 62 commun disposé en aval de la pompe 48.

Ce compresseur-détendeur 62 alimente un accumulateur de pression 64, commun aux deux circuits secondaires 60, par l'intermédiaire d'un clapet anti-retour 66.

Chaque circuit secondaire d'avance 60 comporte un distributeur 68 raccordant l'accumulateur de pression 64 à la buse d'avance 58 correspondante. Le distributeur 68 est du type à tiroir, à trois orifices et deux positions de repos et active respectivement. En variante, le distributeur 68 peut être d'un autre type, par exemple du type à clapet.

Lorsque le distributeur 68 est en position de repos, l'accumulateur de pression 64 est isolé de la buse d'avance 58 et le carter 52 est raccordé à l'amont de la pompe 50 du circuit primaire par l'intermédiaire d'un clapet anti-retour 70.

Lorsque le distributeur 68 est en position active, l'accumulateur de pression 64 est raccordé à la buse d'avance 58.

Les distributeurs 68 des circuits secondaires d'avance 60 sont commandés par une unité centrale commune 72 de gestion des déplacements de la poutre 14, détectant notamment les risques de chocs. Cette unité centrale 72 comporte, par exemple, un radar et des moyens électroniques de gestion d'informations.

Pour déplacer le manchon 22 vers sa première position (telle que représentée sur la figure 2), la roue motrice 20 associée à chaque ensemble de déplacement 18 est entraînée en rotation dans un sens opposé au sens d'avance, dit sens de recul, par un moteur électrique 74 couplé à l'arbre 36. Ce moteur 74 est commandé, de préférence, par l'unité centrale 72.

On décrira ci-dessous les principales étapes de fonctionnement du pare-chocs 10.

Initialement, les manchons 22 des ensembles de déplacement 18 et les distributeurs 68 sont dans leur position de repos telle qu'illustrée sur les figures 1 et 2.

Lorsque l'unité centrale 72 détecte un risque de choc, elle commande les distributeurs 68 en position active, ce qui a pour effet de déplacer les manchons 22 en position de déploiement de la poutre 14.

Le jet d'avance permet d'entraîner très rapidement la roue motrice 20 de manière à obtenir une vitesse de déplacement de la poutre 14 vers sa position de déploiement pouvant atteindre voire dépasser 2 m/s.

Dès que la poutre 14 est dans sa position de déploiement, l'unité centrale 72 commande le retour des distributeurs 68 en position de repos, ce qui a pour effet d'isoler les buses 58 de l'accumulateur de pression 64.

En cas de choc effectif sur le pare-chocs 10, la poutre 14 est maintenue dans sa position de déploiement par l'effet de blocage des filets 34 des vis sans fin 28.

L'allongement du véhicule, résultant du déploiement de la poutre 14, permet d'augmenter les capacités d'absorption d'énergie du pare-chocs. Cet allongement permet notamment, lors d'un choc avant à une vitesse pouvant atteindre 15 km/h, d'absorber l'énergie du choc par déformation élastique et plastique de la poutre 14, des organes d'absorption d'énergie 26 et des ensembles de déplacement 18, ceci sans déformer les longerons 16. La poutre 14, les organes d'absorption d'énergie 26 et les ensembles de déplacement 18, pourront être remplacés à la suite du choc.

En l'absence de choc, ou à la suite d'un faible choc n'endommageant pas les moyens de vissage 24, la poutre 14 est ramenée dans sa position de repos, de façon automatique ou à l'initiative du conducteur. A cet effet, le moteur 74 est actionné de manière à entraîner l'arbre 36 et la roue motrice 20 dans son sens de recul.

La vitesse de rotation de la roue motrice 20 dans le sens de recul est plus faible que dans le sens d'avance car il n'y a pas de situation d'urgence.

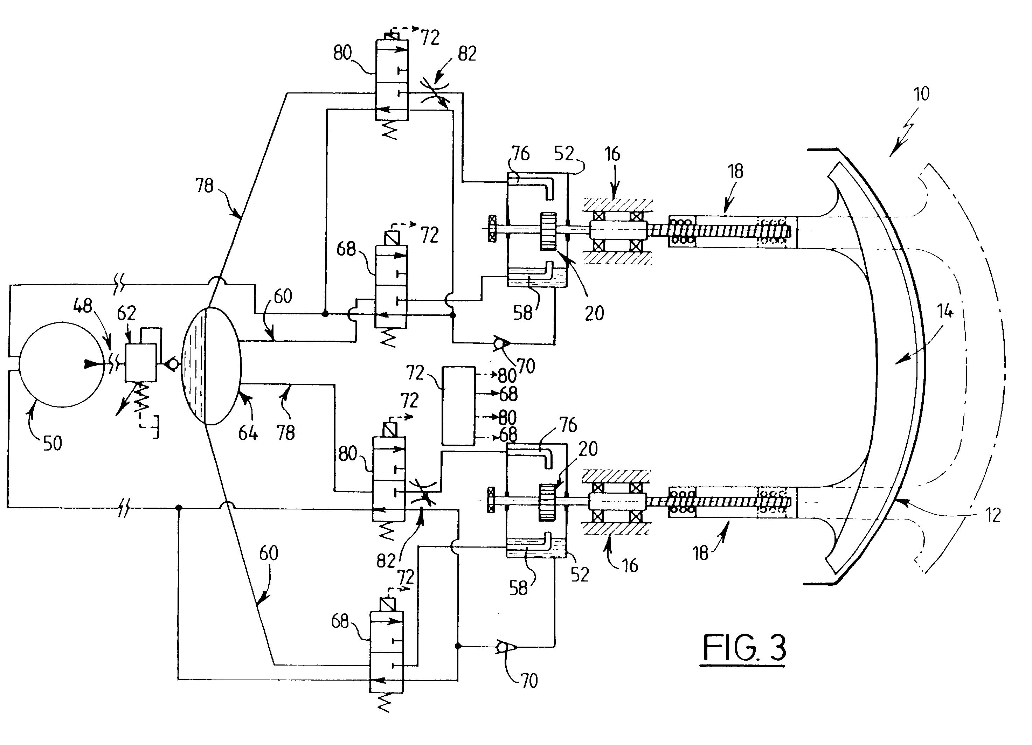

On a représenté sur la figure 3 un pare-chocs 10 agencé, selon un second mode de réalisation de l'invention, à l'avant d'un véhicule automobile.

Sur cette figure 3, les éléments analogues à ceux des figures 1 et 2, sont désignés par des références identiques.

Dans ce cas, la roue motrice 20 des ensembles de déplacement 18 est entraînée dans son sens de recul par un jet de fluide, dit jet de recul, de direction sensiblement opposée au jet d'avance. Le jet de recul est formé par une buse de recul 76 débouchant dans le carter 52 de la roue motrice correspondante.

Les deux buses de recul 76 sont raccordées à l'accumulateur de pression 64 par l'intermédiaire de circuits hydrauliques secondaires de recul respectifs 78 identiques.

De façon similaire aux circuits secondaires d'avance 60, les circuits secondaires de recul 78 comprennent des distributeurs 80 commandés par l'unité centrale 72.

On notera que chaque circuit secondaire de recul 78 comporte un régulateur de débit 82 interposé entre le distributeur 80 et la buse de recul 76, afin d'obtenir une vitesse de rotation de la roue motrice 20 dans le sens de recul inférieure à la vitesse dans le sens d'avance.

Le fonctionnement du pare-chocs 10 agencé selon le second mode de réalisation de l'invention se déduit du fonctionnement décrit dans le cas du premier mode de réalisation de l'invention.

On notera que, dans le second mode de réalisation, pour ramener la poutre 14 dans sa position de repos, l'unité centrale 72 active les distributeurs 80 de manière à alimenter les buses de recul 76.

L'invention ne se limite pas aux modes de réalisation décrits ci-dessus.

En particulier, la roue motrice peut être entraînée par un autre fluide qu'un liquide sous pression, notamment un gaz sous pression, tel qu'un gaz d'échappement du véhicule.

Par ailleurs, les moyens de vissage peuvent être remplacés par tout moyen équivalent de transformation de mouvement de rotation en mouvement de translation, par exemple par des moyens à pignon et crémaillère.

Parmi les avantages de l'invention, on notera les suivants.

L'invention permet de protéger efficacement les organes essentiels du véhicule, notamment les longerons de ce dernier, lors d'un choc se produisant à une vitesse pouvant atteindre 15 km/h, ceci au moyen d'un pare-chocs déployable à l'aide de moyens de vissage autobloquants.

La poutre de pare-chocs agencée selon l'invention peut être déployée à tout moment, même lorsqu'elle est en phase de retour vers sa position de repos.

## Revendications

1. Agencement d'une poutre (14) de pare-chocs (10) dans un véhicule automobile, du type dans lequel la poutre (14) est reliée à un support fixe (16) du véhicule par au moins un ensemble (18) de déplacement longitudinal de cette poutre (14) comportant un organe d'entraînement (20), porté par le support fixe (16), et un organe entraîné (22), relié à la poutre (14), l'organe d'entraînement (20) étant couplé à l'organe entraîné (22) par des moyens (24) de transformation de mouvement de rotation en mouvement de translation de manière à déplacer longitudinalement l'organe entraîné (22) entre des première et seconde positions respectivement de repos et de déploiement de la poutre (14), **caractérisé en ce que** l'organe d'entraînement est une roue motrice (20) entraînée par un fluide sous pression.

2. Agencement selon la revendication 1, caractérisé en ce que la roue motrice (20) est entraînée en rotation dans un sens, dit sens d'avance, par un jet de fluide, dit jet d'avance, de manière à déplacer l'organe entraîné (22) vers sa seconde position.

3. Agencement selon la revendication 2, caractérisé en ce que la roue motrice (20) est entraînée en rotation dans un sens, dit sens de recul, opposé au sens d'avance, par un moteur électrique (74), de manière à déplacer l'organe entraîné (22) vers sa première position.

4. Agencement selon la revendication 2, caractérisé en ce que la roue motrice (20) est entraînée en rotation dans un sens, dit sens de recul, opposé au sens d'avance, par un jet de fluide, dit jet de recul, de direction sensiblement opposée au jet d'avance, de manière à déplacer l'organe entraîné (22) vers sa première position.

5. Agencement selon l'une quelconque des revendications précédentes, caractérisé en ce que la roue motrice (20) est une roue hydraulique entraînée par le liquide sous pression d'un circuit hydraulique primaire (48) du véhicule, notamment un circuit hydraulique de direction assistée du véhicule.

6. Agencement selon la revendication 5, caractérisé en ce que la roue motrice (20) est entraînée par le liquide sous pression d'au moins un circuit hydraulique secondaire (60;78) raccordé au circuit hydraulique primaire (48) par l'intermédiaire d'un compresseur-détendeur (62).

7. Agencement selon la revendication 6, caractérisé en ce que le circuit hydraulique secondaire (60;78) comporte un accumulateur de pression (64) raccordé à une buse (58;76) de formation d'un jet de liquide sous pression dirigé sur la roue motrice (20) par l'intermédiaire d'un distributeur (68;80) commandé par une unité centrale (72) de gestion des déplacements de la poutre (14).

8. Agencement selon l'une quelconque des revendications 5 à 7, caractérisé en ce qu'il comprend deux ensembles de déplacement (18), les deux roues motrices (20) étant entraînées par le liquide sous pression d'au moins deux circuits hydrauliques secondaires respectifs (60;78) identiques raccordés aux circuit hydrauliques primaires (48) par un compresseur-détendeur (62) commun.

9. Agencement selon l'une quelconque des revendications précédentes, caractérisé en ce que les moyens de transformation de mouvement de rotation en mouvement de translation sont constitués par des moyens de vissage.

10. Agencement selon la revendication 9, caractérisé en ce que les moyens de vissage (24) comprennent une vis sans fin (28) montée rotative sur le support fixe (16) et couplée à la roue motrice (20), coopérant par vissage avec une douille (30) à billes solidaire de l'organe entraîné (22), les billes (32) de la douille (30) engrenant avec un filetage (34) autobloquant de la vis sans fin (28).

11. Agencement selon la revendication 10,
caractérisé en ce que l'ensemble de déplacement (18), ou chaque ensemble de déplacement (18), comprend un arbre (36) commun à la roue motrice (20) et à la vis sans fin (28) monté rotatif à l'intérieur d'un longeron (16) du véhicule.
